# EUROPEAN PATENT APPLICATION

(11) **EP 3 369 959 A1**
(43) Date of publication of application: **05.09.2018**
(21) Application number: 16859804.3
(22) Date of filing: 25.10.2016
(51) Int. Cl.: F16D 65/00, F16D 55/225, F16D 55/228, F16D 65/02

(54) **DISC-BRAKE DEVICE**

(30) Priority: 30.10.2015 JP 2015213606
(71) Applicant: Akebono Brake Industry Co., Ltd., Tokyo 103-8534 (JP)
(72) Inventor: YACHI, Tomoki, Tokyo 103-8534 (JP); TOTSUKA, Yoshio, Tokyo 103-8534 (JP); NOGUCHI, Tetsuya, Tokyo 103-8534 (JP)
(74) Representative: Grünecker Patent- und Rechtsanwälte PartG mbB
(86) International application number: PCT/JP2016/081620
(87) International publication number: WO 2017/073574

(57) **Abstract**

A communication path (35), through which abrasion powder resulting from abrasion between a rotor and a pad is allowed to pass, is provided in a caliper (20) constituting an opposed piston type disc brake (1a). Suction inlets (36a) formed at an upstream end portion of the communication path (35) are opened on a part of the surface of the caliper (20) that opposes the side surface of the rotor.

## Description

### Technical Field

The present invention relates to an improvement of a disc brake device used for braking a vehicle such as an automobile.

### Background Art

As a disc brake device for braking an automobile, a brake device represented by a floating type or an opposed piston type is widely used because it is excellent in heat dissipation and can finely adjust braking force at the time of traveling. Among these, the floating type disc brake device has a configuration where a caliper is supported displaceably in an axial direction with respect to a support for supporting a pair of pads movably in the axial direction, and a cylinder and a piston are provided on only one side of a rotor in the caliper. In contrast, the opposed piston type disc brake device has a configuration where a pair of pads is supported movably in the axial direction with respect to a caliper fixed to a vehicle body, and the pads are pressed to the rotor via a plurality of pistons provided in a state of facing the caliper mutually.

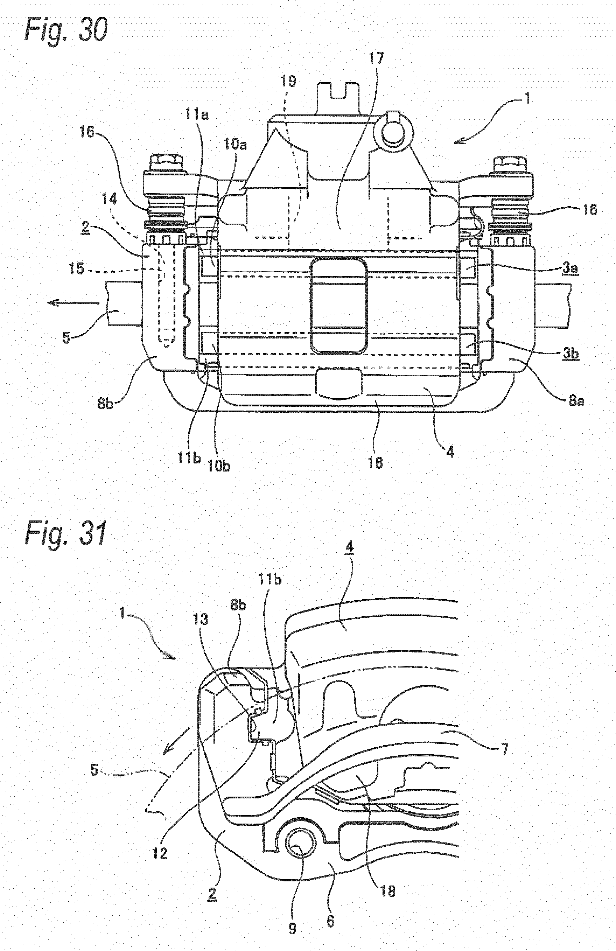

Figs. 30 to 31 show an example of a conventional configuration of a floating type disc brake device described in Patent Document 1 of such two types of disc brake devices.

Incidentally, in the present specification and claims, unless otherwise noted, an axial direction, a circumferential direction, and a radial direction refer to an axial direction, a circumferential direction, and a radial direction of the rotor. Furthermore, a rotation-in side refers to a side where the rotor rotating with vehicle wheels enters the caliper, and a rotation-out side refers to a side where the rotor gets out of the caliper.

An illustrated disc brake device 1 includes a support 2, a pair of inner pad 3a and outer pad 3b, and a caliper 4.

Among these, the support 2 is configured by connecting an inner side part 6 arranged on an inner side of the rotor 5 rotating with the vehicle wheels (not illustrated) with an outer side part 7 arranged on an outer side of the rotor 5 by a pair of connecting arm portions 8a, 8b arranged to straddle the rotor 5 at both end portions in the circumferential direction. The support 2 having such a configuration is fixed to a suspension device such as a knuckle by inserting a bolt (not illustrated) into a mounting hole 9 formed in an inner part in the radial direction of the inner side part 6.

The inner pad 3a and the outer pad 3b are configured by linings 10a, 10b and pressure plates 11a, 11b respectively, and are supported displaceably in the axial direction with respect to the support 2 in a state of facing both side surfaces of the rotor 5. For this reason, locking protruding parts 12 having a protruding shape formed at both end portions in the circumferential direction of the pressure plates 11b (11a) are engaged to recessed torque receiving portions 13 formed at both end portions in the circumferential direction of the support 2 respectively.

In addition, the caliper 4 is supported displaceably in the axial direction with respect to the support 2. For this reason, a pair of guide pins 14 provided at both end portions in the circumferential direction of the caliper 4 is inserted slidably in the axial direction into a pair of guide holes 15 provided in the connecting arm portions 8a, 8b configuring the support 2. In addition, dustproof boots 16, 16 are provided between outer circumferential surfaces of base end portions of the two guide pins 14 and opening portions of the two guide holes 15. In a state of straddling the inner pad 3a and the outer pad 3b, the caliper 4 includes a cylinder portion 17 on the inner side and a claw portion 18 on the outer side. A piston 19 for pressing the inner pad 3a against the inner side surface of the rotor 5 is fitted liquid-tightly in the cylinder portion 17.

In order to perform braking with the disc brake device 1 having the configuration as described above, pressure oil is fed into the cylinder portion 17, and the inner pad 3a is pressed against the inner side surface of the rotor 5 by the piston 19. Then, due to counteraction of the pressing force, the caliper 4 is displaced on the inner side, and the claw portion 18 presses the outer pad 3b against the outer side surface of the rotor 5. As a result, the rotor 5 is strongly clamped from both sides by the inner pad 3a and the outer pad 3b to be braked.

Incidentally, when braking a vehicle with the disc brake device 1 having the configuration as described above, it is known that abrasion powder is generated with sliding contact between the inner and outer side surfaces of the rotor 5 and the linings 10a, 10b configuring the inner pad 3a and the outer pad 3b. In recent years, because awareness of environmental conservation grows, it begins to be considered that abrasion powder generated from the disc brake device is restrained from scattering to the atmosphere, and a burden on the environment is reduced (refer to Patent Document 2). In the Patent Document 2, a configuration which prevents abrasion powder from scattering to surroundings by covering the disc brake device and the whole rotor with a cover is disclosed. However, in a case of such a conventional configuration, it is effective for preventing abrasion powder from scattering, and since it is necessary to use a large cover, it is inevitable to increase a size of the device. In addition, it is difficult to cool the disc brake device arranged in the cover, which may cause a decrease in brake performance.

Incidentally, a problem of scattering of abrasion powder as described above is not limited to a floating type disc brake device but is a problem similarly occurring even on an opposed piston type disc brake device.

### Prior Art Document

### Patent Document

Patent Document 1: JP 2007-10072 A
Patent Document 2: JP 2008-196684 A

### Summary of the Invention

### Problems to be Solved by the Invention

The present invention has been made in view of circumstances as described above to realize a configuration of a disc brake device capable of restraining abrasion powder generated at the time of braking from scattering to surroundings without causing an increase in size of the device and a decrease in brake performance.

### Means for Solving the Problems

The disc brake device of the present invention is realized by the following configuration.
(1) A disc brake device including:
   a pad support member fixed to a vehicle body in a state of being adjacent to a rotor rotating with vehicle wheels;
   a pad guided movably in an axial direction by the pad support member; and
   a piston for pressing the pad toward a side surface of the rotor, wherein
   at least one suction port for sucking in abrasion powder generated based on friction between the side surface of the rotor and the pad opens, on a surface of the pad support member, or on a surface of at least any one of a displacement member and the pad support member when the displacement member configured to be displaced in the axial direction with extrusion of the piston and supported to the pad support member so as to be displaced in the axial direction is provided.

   Specifically, when the disc brake device having a configuration of the above (1) is a floating type disc brake device, a support corresponds to the pad support member. When the disc brake device having the configuration of the above (1) is an opposed piston type disc brake device, a caliper (body) corresponds to the pad support member.
   The pad is a pad guided movably in the axial direction by the pad support member, and two or more pads are provided.
   In addition, the piston is a piston for pressing the pad toward the side surface of the rotor.
   Incidentally, the abrasion powder includes not only abrasion powder generated by scraping a lining configuring the pad, but also abrasion powder generated by scraping the side surface of the rotor (the same in the present specification and entire claims).
   In addition, a case where a displacement member displacing in the axial direction with the extrusion of the piston supported so as to be displaced in the axial direction with respect to the pad support member is provided is, specifically, a case where the disc brake device having the configuration of the above (1) is a floating type disc brake device. In this case, the support corresponds to the pad support member, and the caliper corresponds to the displacement member.
   When implementing the configuration of the above (1), a forming position, number, shape, and the like of the suction port are not particularly limited. In addition, a means for sucking in the abrasion powder from this suction port is not particularly limited, for example, a suction device may be provided in addition to the disc brake device, and a configuration sucking in abrasion powder may be adopted by using air flow generated with traveling wind of the vehicle or rotation of the vehicle wheels (rotor).
(2) The disc brake device according to the above (1), wherein, in a member provided with the suction port, the suction port is provided on a part of the member present near surroundings of the pad.
(3) The disc brake device according to any one of the above (1) to (2), wherein, in the member provided with the suction port, the suction port is provided on a surface facing the side surface or an outer circumferential surface of the rotor.
(4) The disc brake device according to any one of the above (1) to (3), wherein, in the member provided with the suction port, the suction port is provided on a part of the member present at an outside or an inside of the pad in a radial direction.
(5) The disc brake device according to any one of the above (1) to (4), wherein, in the member provided with the suction port, the suction port is provided on a part of the member present at a rotation-out side of the pad with respect to a circumferential direction.
(6) The disc brake device according to the above (5), wherein, a number of the suction port provided on the part present at the rotation-out side of the pad with respect to the circumferential direction is more than a number of the suction port provided on a part of the member present at a rotation-in side of the pad.
(7) The disc brake device according to any one of the above (1) to (6), wherein, in a member provided with the suction port, the suction port is provided on a part of the member straddling the rotor in the axial direction.
(8) The disc brake device according to any one of the above (1) to (7), wherein, the suction port is provided in a state of protruding to a direction approaching to the rotor from a part (for example, an adjacent part) deviated from a part provided with the suction port.
(9) The disc brake device according to any one of the above (1) to (8), wherein a communication passage for passing abrasion powder sucked in from the suction port is provided in the member provided with the suction port, and the suction port is provided on an upstream side end of the communication passage.
(10) The disc brake device according to the above (9), wherein, a part or whole of the communication passage is provided inside the member provided with the suction port.
(11) The disc brake device according to the above (9), wherein, a part of the communication passage is provided outside the member provided with the suction port.
(12) The disc brake device according to any one of the above (9) to (11), wherein, a part or whole of the communication passage is configured by a member in addition to the member provided with the suction port (for example, a pipe having a circular tube shape or a semi-circular tube shape).
(13) The disc brake device according to any one of the above (9) to (12), wherein, the communication passage merges as proceeding to a downstream side (branch as proceeding to the upstream side).
(14) The disc brake device according to any one of the above (9) to (13), wherein a discharge port for discharging the abrasion powder sucked from the suction port into the communication passage from the communication passage is provided in the member provided with the suction port on a downstream side end of the communication passage.
(15) The disc brake device according to the above (14), wherein a connecting portion for connecting a device for inducing air flow from the upstream side to the downstream side in the communication passage is provided in the member provided with the suction port on a part where the discharge port is provided.
(16) The disc brake device according to the above (15), wherein air discharged from the discharge ports is passed through a filter (by a filter provided between the connecting portion and a device connected to the connecting portion), and the abrasion powder is collected.
(17) The disc brake device according to the above (16), wherein air in which the abrasion powder is collected through the filter is fed (discharged) into the suction ports.
(18) The disc brake device according to any one of the above (1) to (17), wherein the member provided with the suction ports is a caliper configuring an opposed piston type disc brake device.
(19) The disc brake device according to any one of the above (1) to (17), wherein the member provided with the suction port is a support or a caliper supported so as to be displaced in the axial direction with respect to the support which configure a floating type disc brake device.

### Effect of the Invention

According to the disc brake device of the present invention having the configuration as described above, the abrasion powder generated at the time of braking can be restrained from scattering to the surroundings without causing an increase in size of the device and a decrease in brake performance.

That is, in a case of the present invention, among members configuring the disc brake device, a suction port for sucking in abrasion powder opens, on the surface of the pad support member for guiding the pad movably in the axial direction, or on a surface of any one of the displacement member and the pad support member in a case where the displacement member supported to the pad support member so as to be displaced in the axial direction is provided. Therefore, according to the present invention, the abrasion powder generated based on friction between the side surface of the rotor and the pad at the time of braking can be sucked in from the suction ports opening on the surface of the pad support member or the displacement member. Therefore, the abrasion powder can be restrained from scattering to the surroundings.

In a case of the present invention, since it is unnecessary to provide a member such as a cover covering the disc brake device to prevent the abrasion powder from scattering, an increase in size of the device can be prevented. In addition, since it is unnecessary to cover the disc brake device, cooling performance of the disc brake device has not been impaired, and brake performance can be prevented from decreasing.

As the above, according to the disc brake device of the present invention, abrasion powder generated at the time of braking can be restrained from scattering to the surroundings without causing an increase in size of the device and a decrease in brake performance.

### Brief Description of Drawings

Fig. 1 is an orthographic view showing an opposed piston type disc brake device of a first embodiment of the present invention when seen from an outside in the radial direction.
Fig. 2 is an orthographic view showing the opposed piston type disc brake device shown in Fig. 1 when seen from an inner side.
Fig. 3 is an orthographic view showing the opposed piston type disc brake device shown in Fig. 1 when seen from a rotation-out side.
Fig. 4 is a perspective view showing the opposed piston type disc brake device shown in Fig. 1 when seen from the inner side and the outside in the radial direction.
Fig. 5 is a perspective view same as Fig. 4 showing the opposed piston type disc brake device shown in Fig. 1 after removing the pad.
Fig. 6 is an A-O-O-A sectional view of the opposed piston type disc brake device shown in Fig. 1.
Fig. 7 is a B-B sectional view of the opposed piston type disc brake device shown in Fig. 3.
Fig. 8 is a C-C sectional view of the opposed piston type disc brake device shown in Fig. 3.
Fig. 9 is a D-D sectional view of the opposed piston type disc brake device shown in Fig. 7.
Fig. 10 is an E-E sectional view of the opposed piston type disc brake device shown in Fig. 7.
Fig. 11 is a cross-sectional view corresponding to Fig. 7 showing a second embodiment of the present invention.
Fig. 12 is a cross-sectional view corresponding to Fig. 8 showing a second embodiment of the present invention.
Fig. 13 is a perspective view showing a third embodiment of the present invention after removing pipes configuring a communication passage.
Fig. 14 is a cross-sectional view corresponding to an F-F section in Fig. 7 showing a fourth embodiment of the present invention.
Fig. 15 is an orthographic view corresponding to Fig. 1 showing a fifth embodiment of the present invention.
Fig. 16 is a cross-sectional view corresponding to a G-G section in Fig. 15 showing a sixth embodiment of the present invention.
Fig. 17 is an orthographic view showing the floating type disc brake device of a seventh embodiment of the present invention when seen from the inner side.
Fig. 18 is an orthographic view showing the floating type disc brake device shown in Fig. 17 when seen from a rotation-out side.
Fig. 19 is an orthographic view showing the floating type disc brake device shown in Fig. 17 when seen from inside in the radial direction.
Fig. 20 is a perspective view showing the floating type disc brake device shown in Fig. 17 when seen from the inner side and an inside in the radial direction.
Fig. 21 is a perspective view same as Fig. 20 showing the floating type disc brake device shown in Fig. 17 after removing the pad.
Fig. 22 is an H-H cross-sectional view of the floating type disc brake device shown in Fig. 17.
Fig. 23 is an I-I cross-sectional view of the floating type disc brake device shown in Fig. 18.
Fig. 24 is a J-J cross-sectional view of the floating type disc brake device shown in Fig. 18.
Fig. 25 is a K-K cross-sectional view of the floating type disc brake device shown in Fig. 23.
Fig. 26 is an L-L cross-sectional view of the floating type disc brake device shown in Fig. 23.
Fig. 27 is a cross-sectional view corresponding to Fig. 22 showing an eighth embodiment of the present invention.
Fig. 28 is a cross-sectional view corresponding to Fig. 23 showing an eighth embodiment of the present invention.
Fig. 29 is a cross-sectional view corresponding to Fig. 24 showing an eighth embodiment of the present invention.
Fig. 30 is a plan view showing a floating type disc brake device having a conventional configuration.
Fig. 31 is a front view omitting a right half of the floating type disc brake device having the conventional configuration shown in Fig. 30.

### Description of Embodiments

### [First Embodiment]

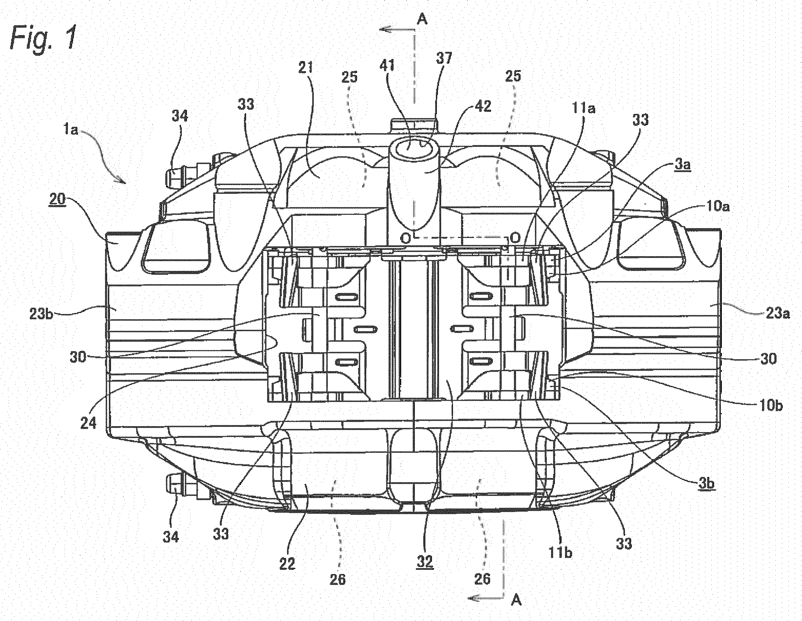

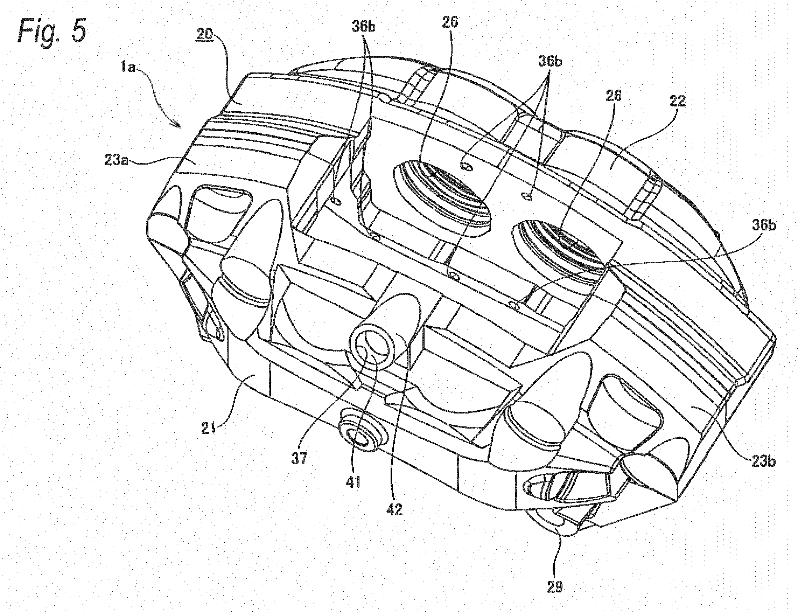

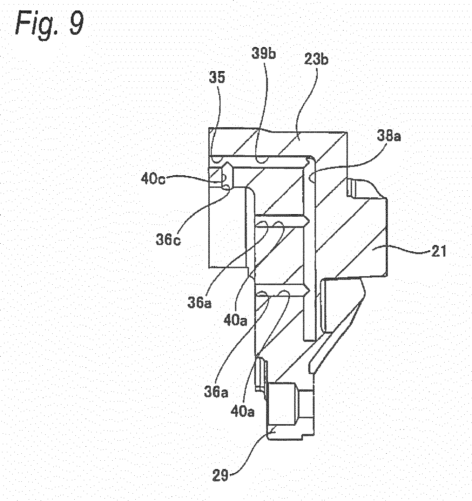

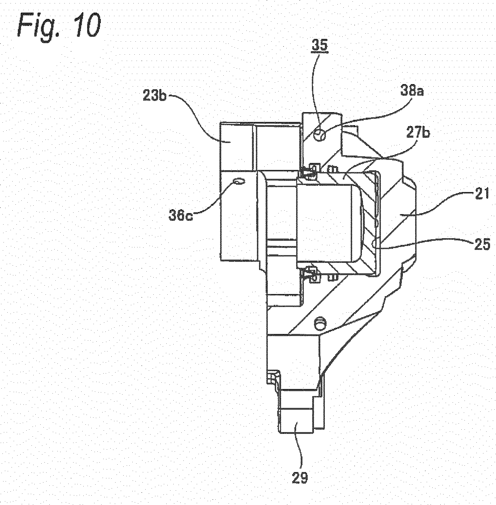

Fig. 1 to 10 show a first embodiment of the present invention. In the first embodiment, the present invention is described when applied to an opposed piston type disc brake device 1a which is a type of disc brake.

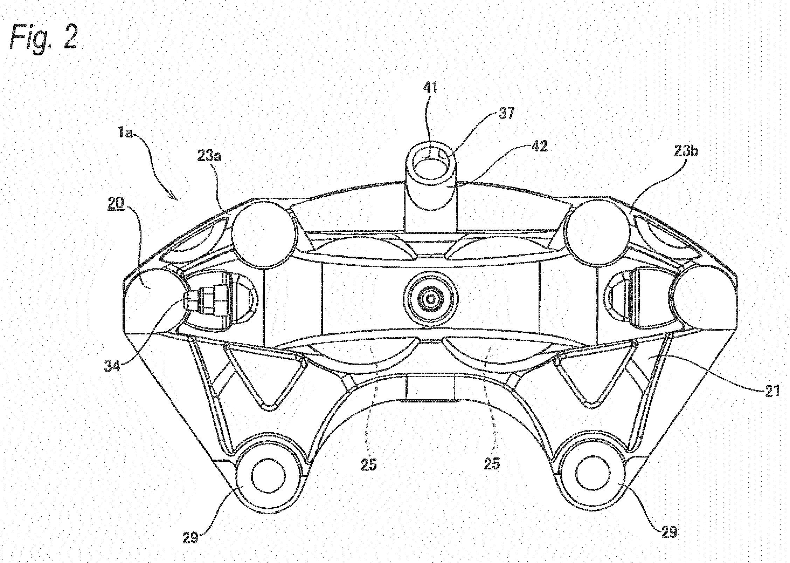

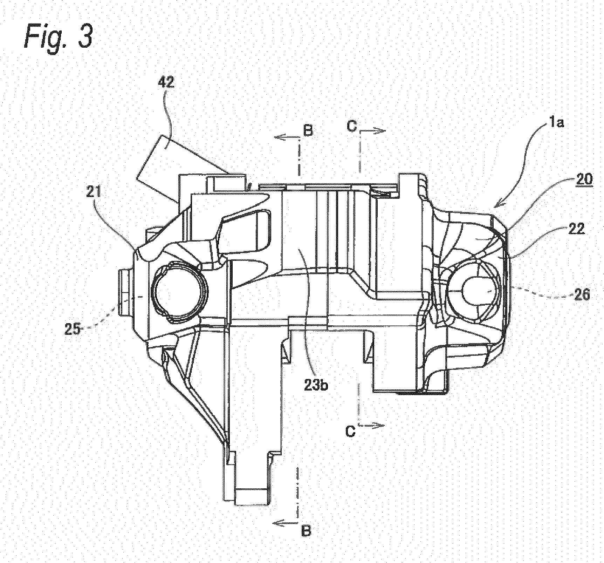

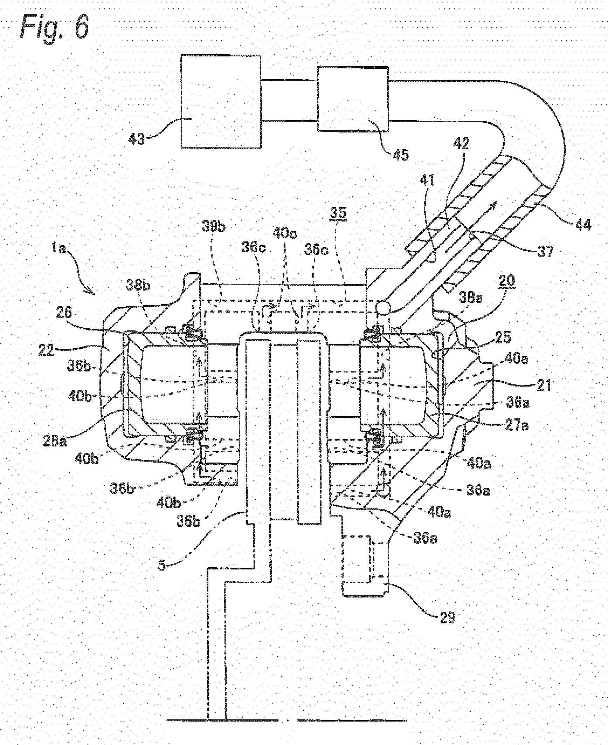

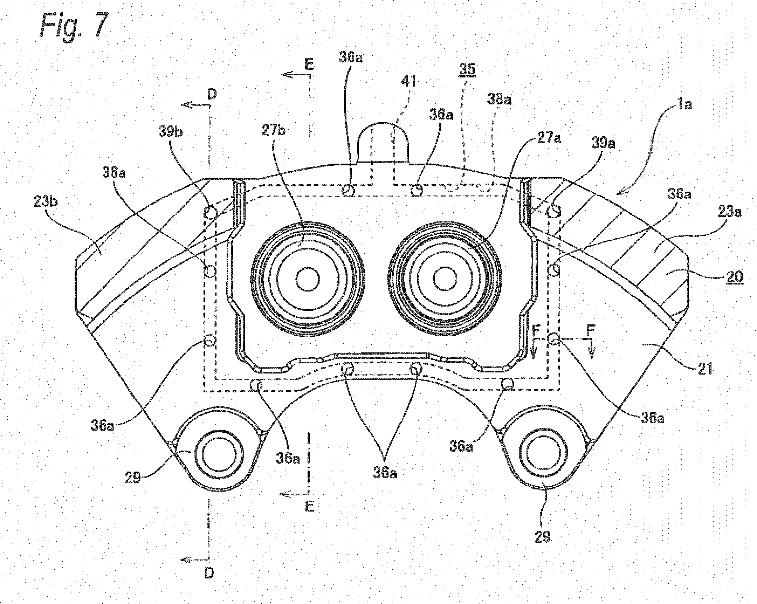

A caliper 20 configuring the disc brake device 1a of the first embodiment supports an inner pad 3a and an outer pad movably in an axial direction (an up-down direction in Fig. 1, a front-rear direction in Fig. 2, a left-right direction in Fig. 3). Such a caliper 20 includes an inner body part 21 and an outer body part 22 provided in a state of sandwiching a rotor 5 (refer to Fig. 6), and a pair of connecting portions 23a, 23b that connects an end portion on one side in a circumferential direction (right sides in Figs. 1 and 7, left sides in Figs. 2, 4, 5 and 8, and a rotation-in side at the time of traveling forward) with an end portion on the other side in the circumferential direction (left sides in Figs. 1 and 7, right sides in Figs. 2, 4, 5 and 8, and a rotation-out side at the time of traveling forward) of the inner body part 21 and the outer body part 22, respectively. Furthermore, a part (opening portion) surrounded by the inner body part 21, the outer body part 22, and the connecting portions 23a, 23b is a window portion 24 having a substantially rectangular shape in a plan view. In addition, two inner cylinders 25, 25 and two outer cylinders 26, 26 are provided in the inner body part 21 and the outer body part 22 respectively. Furthermore, the inner pistons 27a, 27b and outer pistons 28a, 28b are fitted in the inner cylinders 25, 25 and the outer cylinders 26, 26 respectively oil-tightly and so as to be displaced in the axial direction. Such a caliper 20 is supported and fixed on the vehicle body side (a knuckle of a suspension device) by a pair of mounting seats 29, 29 provided on the inner body part 21. In addition, in the case of the first embodiment, the caliper 20 has a two-part configuration, and a configuration is adopted where the inner body part 21 and the outer body part 22 are connected (bolt fixed) on a central part in the axial direction.

The inner pad 3a and the outer pad 3b are configured by linings 10a, 10b and pressure plates 11a, 11b respectively, Also, the inner pad 3a and the outer pad 3b are displaceable in the axial direction on an outer part in the radial direction than the outer circumference of the rotor 5 in a state of being hung at two pad pins 30, 30 bridged between the inner body part 21 and the outer body part 22 respectively. For this reason, guide holes 31, 31 are formed on an outer circumference part of the pressure plates 11a, 11b respectively, and the two pad pins 30, 30 are loosely inserted into the two guide holes 31, 31.

In addition, a pad spring 32 is installed between the two pad pins 30, 30 and the inner pad 3a and the outer pad 3b. This pad spring 32 is formed by bending a plate material having elasticity and corrosion resistance such as stainless spring steel, and a pair of elastic arm portions 33, 33 is provided on two end portions in the circumferential direction respectively. Furthermore, the elastic arm portions 33, 33 abut on the outer circumference part of the pressure plates 11a, 11b configuring the inner pad 3a and outer pad 3b elastically, respectively. Therefore, when braking is released, the inner pad 3a and outer pad 3b are drawn apart from the side surface of the rotor 5 by elastic force applied from the elastic arm portions 33, 33, and at the time of non-braking, the inner pad 3a and the outer pad 3b are prevented from shaking with respect to the caliper 20 by pressing the inner circumferential surface of the guide holes 31, 31 against the outer circumferential surface of the pad pins 30, 30.

In addition, an oil passage (not illustrated) communicating with the inner cylinder 25 and the outer cylinder 26 is formed inside the caliper 20. At the time of braking, pressure oil is fed into the inner cylinder 25 and the outer cylinder 26 through the oil passage. Furthermore, as the pressure oil is fed in, the inner pistons 27a, 27b and the outer pistons 28a, 28b fitted in the inner cylinder 25 and the outer cylinder 26 respectively are extruded, and the linings 10a, 10b configuring the inner pad 3a and the outer pad 3b are pressed against two side surfaces of the rotor 5 by the pistons 27a, 27b, 28a, 28b. In addition, bleeder screws 34, 34 used in air bleeding operation in the oil passage are provided in the inner body part 21 and the outer body part 22, respectively.

Particularly, in the case of the first embodiment, a communication passage 35 is formed in the caliper 20 in a state of not communicating with (being continuous with) the oil passage in addition to the oil passage used for feeding the pressure oil as described above. At the time of braking, abrasion powder generated with friction between the side surface of the rotor 5 and the linings 10a, 10b configuring the inner pad 3a and the outer pad 3b is passed in the communication passage 35, and on an upstream side end thereof, a plurality of suction ports 36a, 36b, 36c opening on the surface of the caliper 20 are provided, and one discharge port 37 opening on the surface of the caliper 20 is provided on a downstream side end thereof.

Specifically, the communication passage 35 of the first embodiment includes a pair of main passages 38a, 38b, a pair of connecting passages 39a, 39b, a plurality (equal to the number of the suction ports 36a to 36c) of upstream end passages 40a, 40b, 40c, and one downstream end passage 41.

Among these, the main passages 38a, 38b are in a rectangular annular shape, and are formed to surround the two inner cylinders 25, 25 and the two outer cylinders 26, 26 respectively in the inner body part 21 and the outer body part 22. The connecting passages 39a, 39b are formed in the axial direction inside the connecting portions 23a, 23b, and the two main passages 38a, 38b are continuous with each other. In addition, the upstream end passages 40a, 40b, 40c are provided in a state of being continuous with the suction ports 36a, 36b, 36c. Among these, the upstream end passages 40a, 40b are continuous with the suction ports 36a, 36b and the main passages 38a, 38b respectively, and the upstream end passages 40c are continuous with the suction ports 36c, 36c and the connecting passages 39a, 39b respectively. The downstream end passage 41 is continuous with the main passage 38a and the discharge port 37 formed on the inner body part 21. In this way, in the case of the first embodiment, passages 38a to 41 configuring the communication passage 35 are configured to merge (the number of passages decreases) as proceeding to the downstream (upstream end passages 40a, 40b, 40c → main passages 38a, 38b and connecting passages 39a, 39b → downstream end passage 41) from the upstream,

In addition, in the case of the first embodiment, each of passages 38a to 41 configuring the communication passage 35 is circular in cross section and is formed directly in the caliper 20. Specifically, the communication passage 35 is formed by drilling using a tool such as a drill same as the oil passage. In addition, opening areas (cross-sectional areas) of the main passages 38a, 38b, the connecting passages 39a, 39b, and the upstream end passages 40a, 40b, 40c are equal to each other and are about 1/4 of an opening area of the downstream end passage 41.

The suction ports 36a, 36b, 36c are inlets for sucking abrasion powder generated with friction between the side surface of the rotor 5 and the two linings 10a, 10b into the caliper 20 (communication passage 35), and are provided on a part 20 which is present near surroundings of the inner pad 3a and the outer pad 3b in the caliper. Among the suction ports 36a, 36b, 36c, the suction ports 36a, 36a formed on the inner body part 21 open on the outer side surface of the inner body part 21 and face the inner side surface of the rotor 5. In the case of the first embodiment, the suction ports 36a, 36a are arranged at an outside in the radial direction and an inside in the radial direction of the inner pads 3a respectively (two arranged outside in the radial direction and four arranged inside in the radial direction), and are arranged at the rotation-in side and the rotation-out side of the inner pad 3a with respect to the circumferential direction respectively (two arranged on the rotation-in side and two arranged on the rotation-out side). In addition, the suction ports 36b, 36b formed on the outer body part 22 open on the inner side surface of the outer body part 22 and face the outer side surface of the rotor 5. In the case of the first embodiment, the suction ports 36b, 36b are arranged at an outside in the radial direction and at an inside in the radial direction of the outer pad 3b respectively (two arranged outside in the radial direction and four arranged inside in the radial direction), and are arranged at the rotation-in side and the rotation-out side of the outer pad 3b with respect to the circumferential direction respectively (two arranged on the rotation-in side and two arranged on the rotation-out side). Further, the suction ports 36c, 36c formed on the connecting portions 23a, 23b straddling the rotor 5 in the axial direction open on the inner side surfaces in the radial direction of the connecting portions 23a, 23b, and face the outer circumferential surface of the rotor 5.

A cylindrical connecting tube portion 42 is provided in a part of the inner body part 21 where the discharge port 37 is provided. The connecting tube portion 42 is a connecting portion used for connecting a suction device 43 (refer to Fig. 6) for causing air flow from the upstream side to the downstream side in the communication passage 35. In the case of the first embodiment, the other end portion of a duct 44, one end of which is connected to the suction device 43, is connected to the connecting tube portion 42. As the suction device 43, for example, a pump, a fan, or the like that generates negative pressure, not only a device electrically driven by an electric motor or the like, but also a device driven by using air flow generated with traveling wind of a vehicle and rotation of vehicle wheels (rotor 5) can be used. Incidentally, in a case of electrically driving the suction device 43, a suction amount of the suction device 43 can also be changed according to a depression amount of a brake pedal.

In addition, an exchangeable filter 45 is provided at an intermediate portion (midway) of the duct 44. Therefore, in the case of the first embodiment, air discharged from the discharge port 37 is passed through the filter 45 to recover (capture) the abrasion powder. In addition, in the case of the first embodiment, although omitted in the drawings, after the abrasion powder discharged from the suction device 43 is recovered, air is used for feeding in (blowing down) from for example, the lower side of the disc brake device 1a and is fed into the suction ports 36a, 36b, 36c effectively, and an amount of abrasion powder falling by the action of gravity is reduced.

Even in a case of the disc brake device 1 a of the first embodiment having a configuration as above, at the time of braking, abrasion powder (brake dust) generates with sliding contact between two side surfaces of the rotor 5 and linings 10a, 10b configuring the inner pad 3a and outer pad 3b. However, according to the disc brake device 1a of the first embodiment, abrasion powder generated in this way can be effectively prevented from scattering to surroundings.

That is, in the case of the first embodiment, the air flow from the upstream side to the downstream side in the communication passage 35 can be caused by driving the suction device 43 at the time of braking of the disc brake device 1 a or traveling of a vehicle. Therefore, air is sucked in from the suction ports 36a, 36b, 36c separately, and the sucked air is passed through the communication passage 35 and discharges from the discharge port 37. More specifically, air sucked in from the suction port 36a passes through the upstream end passage 40a and the main passage 38a in this order, and then is discharged from the discharge port 37. In addition, the air sucked in from the suction port 36b passes through the upstream end passage 40b, the main passage 38b, the connecting passages 39a, 39b, and the main passage 38a, and then is discharged from the discharge port 37. In addition, the air sucked in from the suction port 36c passes through the upstream end passages 40c, the connecting passages 39a, 39b, and the main passage 38a in this order, and then is discharged from the discharge port 37. Therefore, in the case of the first embodiment, together with air having flow as described above, abrasion powder can be sucked in from the suction ports 36a, 36b, 36c separately, passed through the communication passage 35, and discharged from the discharge port 37. Further, the abrasion powder discharged from the discharge port 37 can be collected by the filter 45 provided in the midway of the duct 44. Therefore, according to the disc brake device 1a of the first embodiment, abrasion powder generated at the time of braking can be restrained from scattering to the surroundings, and a burden on the environment can be reduced. In addition, it is also possible to prevent the vehicle wheels from being contaminated by adhering abrasion powder to the vehicle wheels.

Additionally, in the case of the first embodiment, the suction ports 36a, 36b, 36c are provided in a state of opening on the surface of the caliper 20, and since the suction ports 36a, 36b, 36c are located near the side surface of the rotor 5 and the linings 10a, 10b, which is a position where the abrasion powder is generated, it is possible to efficiently suck the abrasion powder in even without using a suction device having a large suction amount. In addition, in the case of the first embodiment, among the generated abrasion powder, abrasion powder blown away outward in the radial direction with rotation of the rotor 5 can be sucked in by the suction ports 36a, 36b, 36c provided at an outside in the radial direction of the inner pad 3a and the outer pad 3b, and the abrasion powder blown away to the rotation-out side can be sucked in through the suction ports 36a, 36b, 36c provided at the rotation-out side of the inner pad 3a and the outer pad 3b. In addition, among the generated abrasion powder, abrasion powder falling by the action of gravity can be sucked in efficiently by the suction ports 36a, 36b arranged in parts located below the inner pad 3a and the outer pad 3b when established to the knuckle.

In addition, in the case of the first embodiment, since it is unnecessary to provide a member such as a cover covering the disc brake device to prevent scattering of abrasion powder as the conventional configuration, an increase in size of the device can be prevented. In addition, since it is unnecessary to cover the disc brake device, cooling performance of the disc brake device has not been impaired, and brake performance can be prevented from decreasing.

As the above, according to the disc brake device 1 a of the first embodiment, abrasion powder generated at the time of braking can be restrained from scattering to the surroundings without causing an increase in size of the device and a decrease in brake performance.

### [Second Embodiment]

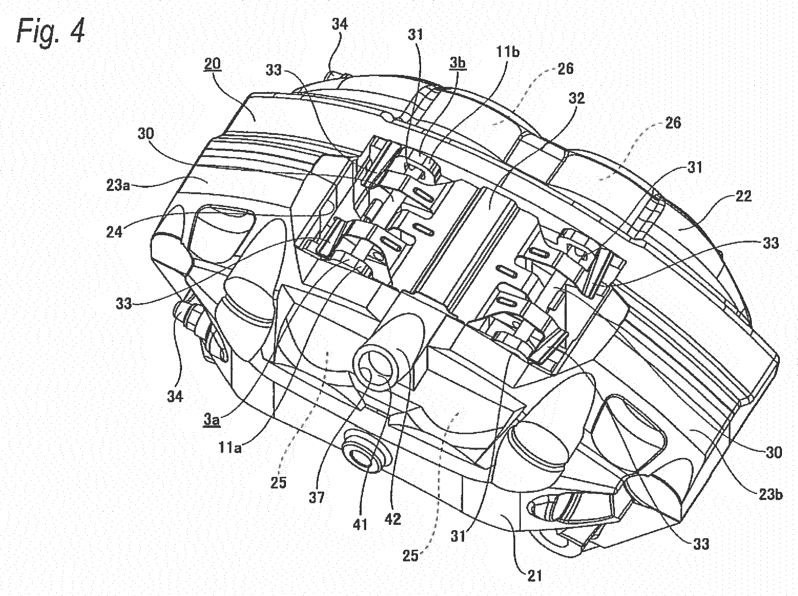

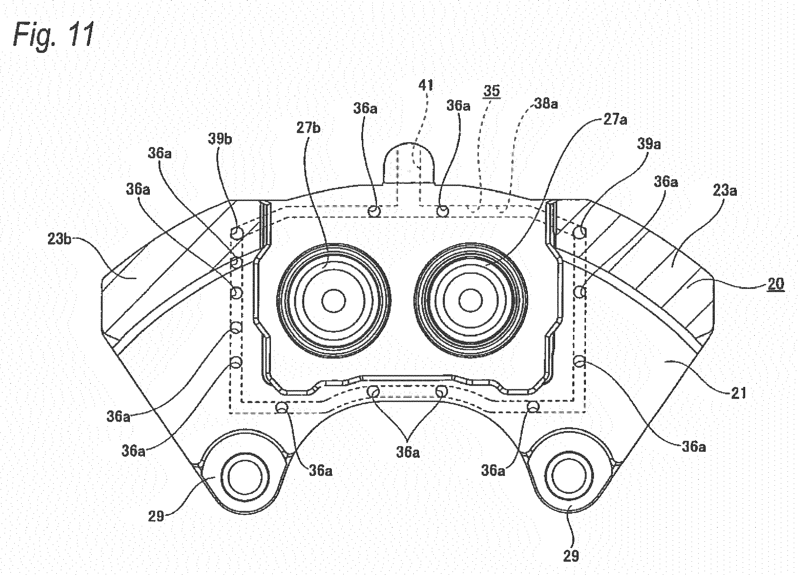

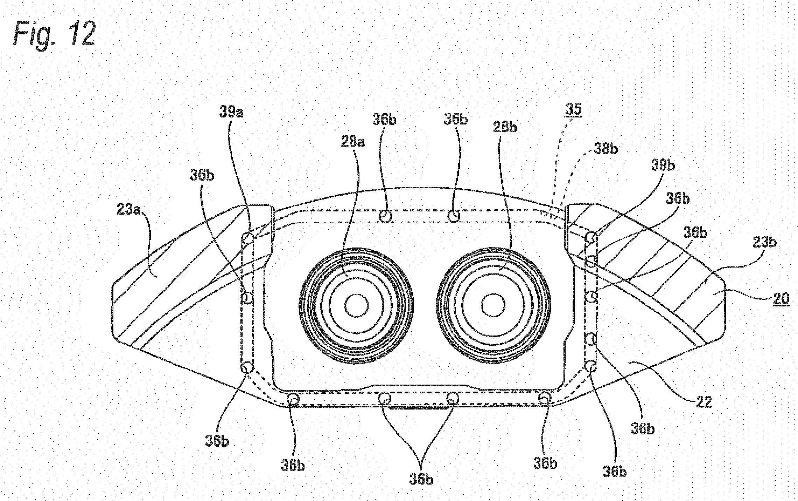

Figs. 11 to 12 show a second embodiment of the present invention. Characteristics of the second embodiment lie in that the number of suction ports 36a, 36b provided at the rotation-out side (the left side in Fig. 11, the right side in Fig. 12) of the inner pad 3a and the outer pad 3b (refer to Figs. 1 and 4) is larger than the number of suction ports 36a, 36b provided at the rotation-in side (the right side in Fig. 11, the left side in Fig. 12) of the inner pad 3a and the outer pad 3b. In the illustrated example, four suction ports 36a, 36b are provided on the rotation-out side in a state of facing the side surface of the rotor 5 (refer to Fig. 6), and two suction ports 36a, 36b are provided on the rotation-in side in a state of facing the side surface of the rotor 5.

According to the disc brake device 1a of the second embodiment having the configuration as the above, the abrasion powder scattering more on the rotation-out side than the rotation-in side due to the air flow generated with rotation of the vehicle wheels and the rotor 5 can be sucked in efficiently.

Incidentally, as a modification of the second embodiment, the number of suction ports provided on the rotation-out side can be the same as the number of suction ports provided on the rotation-in side, and the opening areas (sum) of the suction ports provided on the rotation-out side can also be larger than the opening areas (sum) of the suction ports provided on the rotation-in side. Even in this case, it is possible to achieve the same effect as the case of the second embodiment. Further, if both the number and opening area of suction ports on the rotation-out side are larger than those on the rotation-in side, it is possible to suck in abrasion powder more efficiently.

Other configurations and action effects are the same as those in the first embodiment.

### [Third Embodiment]

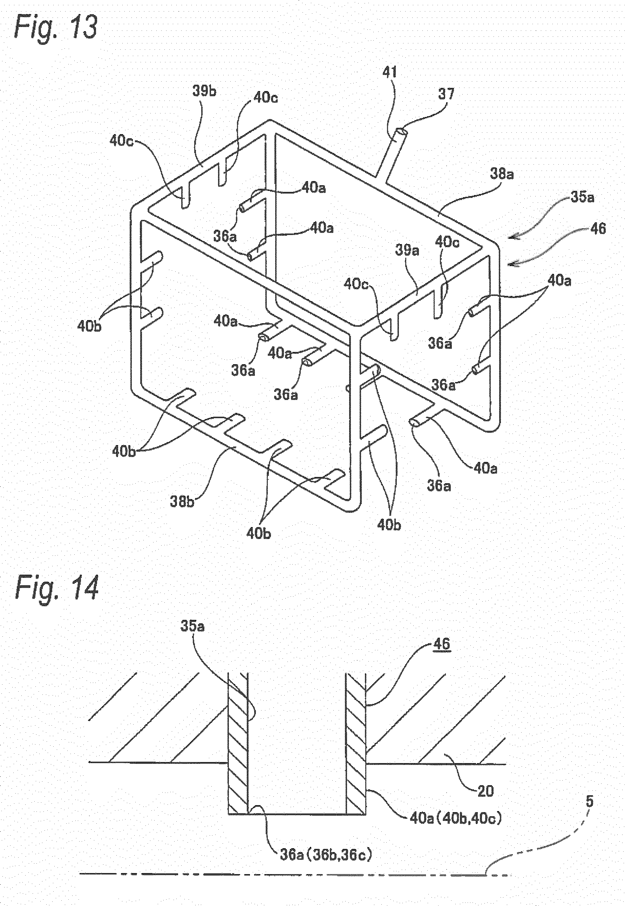

Fig. 13 shows a third embodiment of the present invention. Characteristics of the third embodiment lie in that the whole communication passage 35a is configured by a metallic tubular pipe 46 which is another member provided in addition to the caliper 20 (refer to Figs. 1 to 10). That is, in the case of the third embodiment, a pipe 46 manufactured into a shape as shown in Fig. 13 is cast (buried) during casting of the caliper 20, so that the communication passage 35a is provided in the caliper 20.

In the case of the third embodiment having the configuration as above, as compared with a case where the communication passage 35a is formed by drilling using a drill or the like, it is possible to form the communication passage 35a easily and at low cost. In addition, it is easy to use the caliper 20 having a integral configuration.

Other configurations and action effects are the same as those in the first embodiment.

### [Fourth Embodiment]

Fig. 14 shows a fourth embodiment of the present invention. The fourth embodiment is a modification of the third embodiment, in which the total length of a part of a pipe 46 configuring the upstream end passage 40a (40b, 40c) of the communication passage 35a is longer than that in the third embodiment. Thereby, the tip end portion of the upstream end passage 40a (40b, 40c) protrudes in a direction approaching to the rotor 5 from the surface of the caliper 20. Thereby, the suction port 36a (36b, 36c) provided at the tip end portion of the upstream end passage 40a (40b, 40c) is arranged at a position close to the side surface (or circumferential surface) of the rotor 5.

In the case of the fourth embodiment having a configuration as the above, since the suction ports 36a (36b, 36c) is brought near a generation position of the abrasion powder, the abrasion powder can be sucked in effectively before scattering by traveling wind, air flow, and the like.

Incidentally, when implementing the fourth embodiment, a configuration can also be adopted where only a part (for example, arranged on the rotation-out side) of the upstream end passage 40a (40b, 40c) is protruded to the rotor 5 side from the surface of the caliper 20.

Other configurations and action effects are the same as those in the third embodiment.

### [Fifth Embodiment]

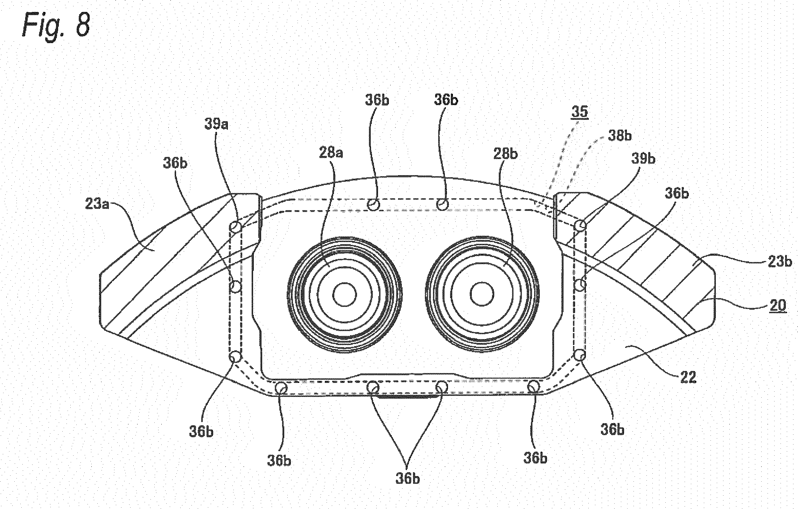

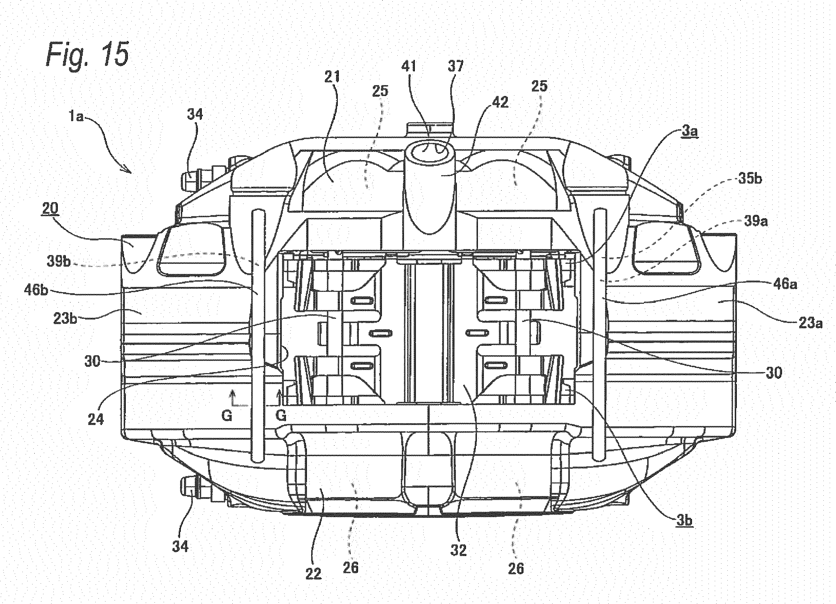

Fig. 15 shows a fifth embodiment of the present invention. Characteristics of the fifth embodiment lie in that a pair of connecting passages 39a, 39b which is a part of the communication passages 35b is configured by metallic pipes 46a, 46a provided in addition to the caliper 20. Specifically, the pipes 46a, 46a formed in a substantially U shape are fixed on an outside surface in the radial direction of the caliper 20 when two ends of each are continuous with a part (an outer end in the radial direction) of the main passage 38a (refer to Figs. 6 and 7) formed in the inner body part 21 and a part (an outer end in the radial direction) of the main passage 38b (refer to Figs. 6 and 8) formed in the outer body part 22 respectively.

In a case of the fifth embodiment having a configuration as the above, it is possible to facilitate forming operation of the communication passage 35b, and it is possible to plan to reduce manufacturing cost.

Incidentally, in the case of implementing the fifth example, it is possible to appropriately change a part configured by pipes in the communication passage.

Other configurations and action effects are the same as those in the first embodiment.

### [Sixth Embodiment]

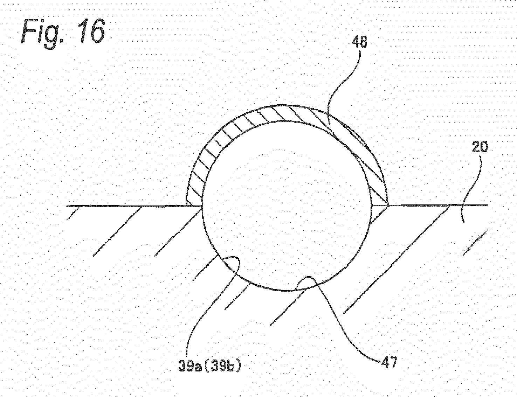

Fig. 16 shows a sixth embodiment of the present invention. The sixth embodiment is a modification of the fifth embodiment, in which a recessed groove 47 having a semi-circular cross section is formed in the radial direction on the outside surface in the axial direction of the caliper 20, and a semi-cylindrical cover (pipe) 48 is fixed when the recessed groove 47 is covered from outside in the radial direction. Further, a part between the recessed groove 47 and the cover 48 is a connecting passage 39a (39b).

In the case of the sixth embodiment having the above configuration, compared with the fifth embodiment, it is advantageous on planning to reduce the size and weight of the disc brake device 1 a.

Other configurations and action effects are the same as those in the first embodiment and the fifth embodiment.

### [Seventh Embodiment]

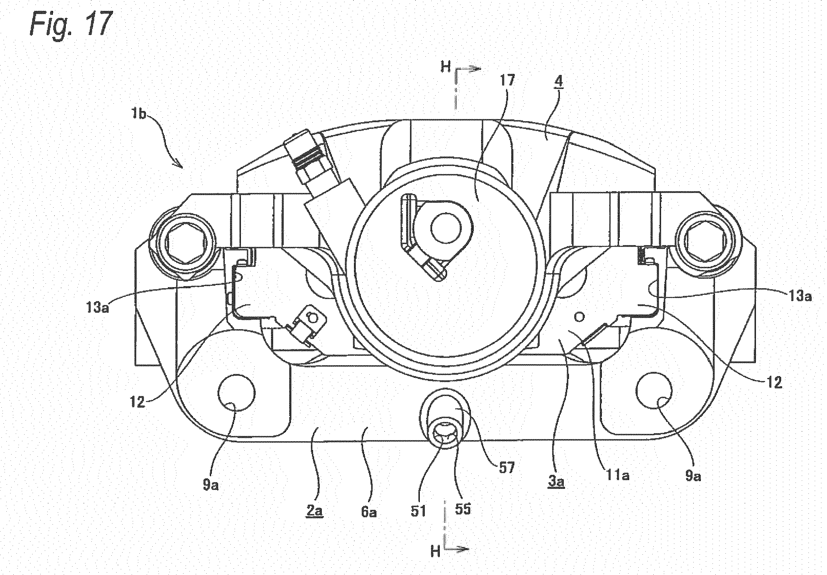

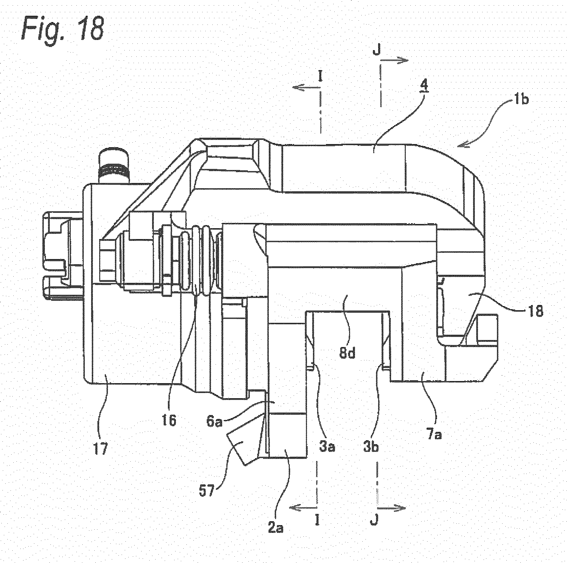

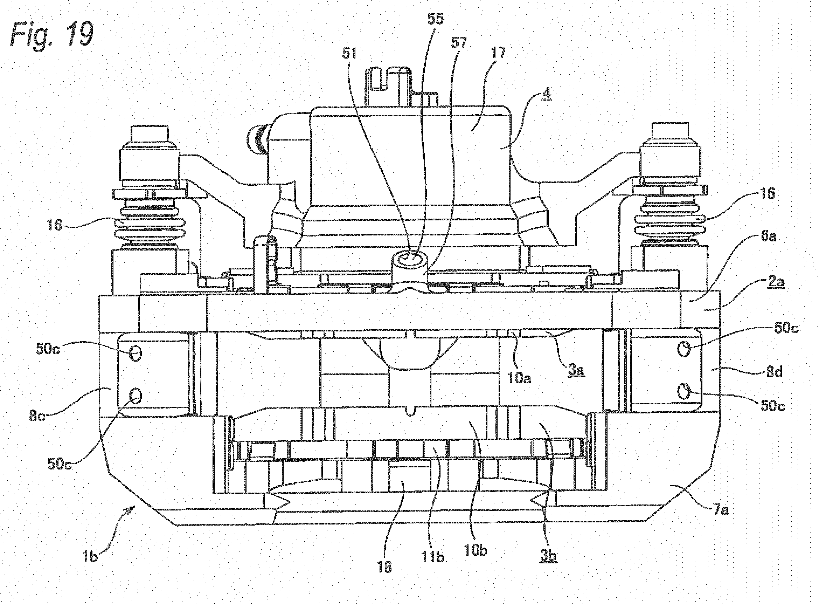

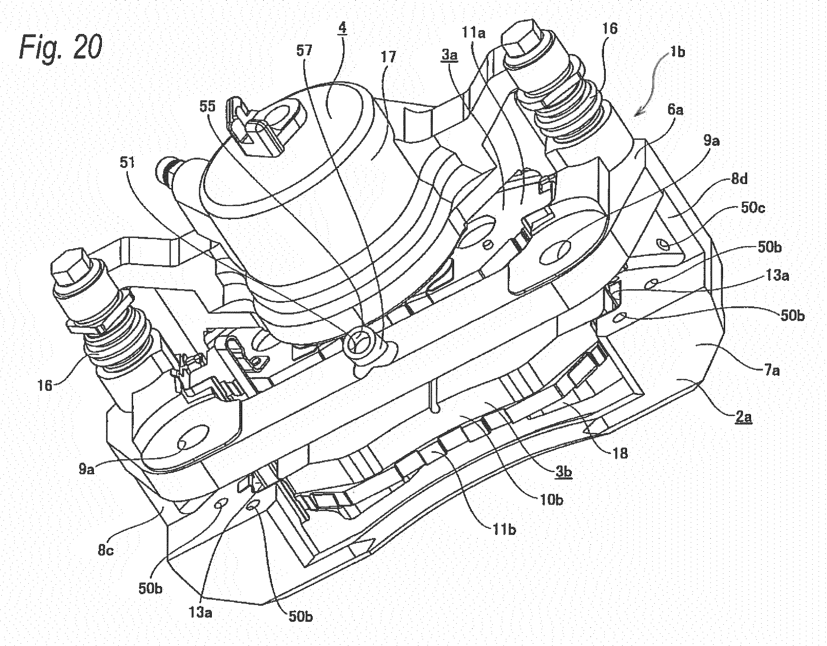

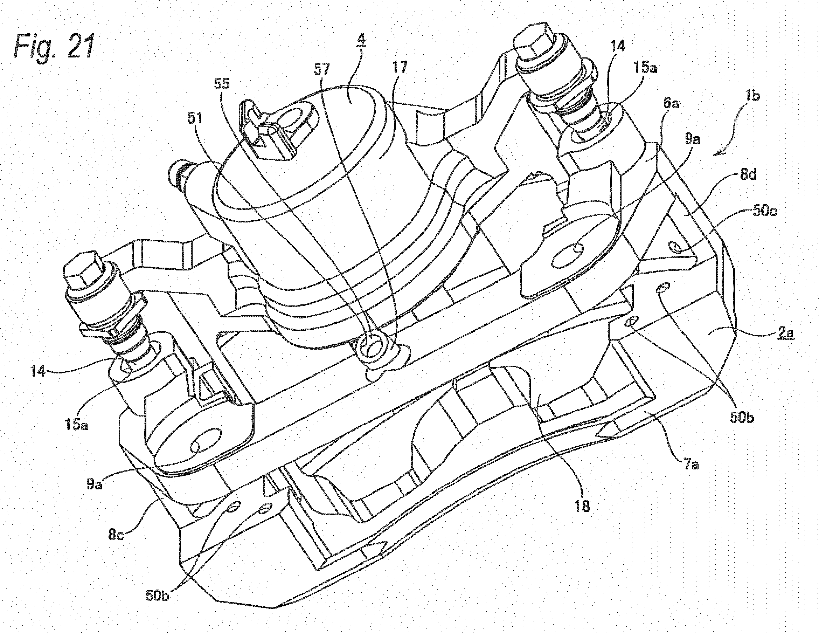

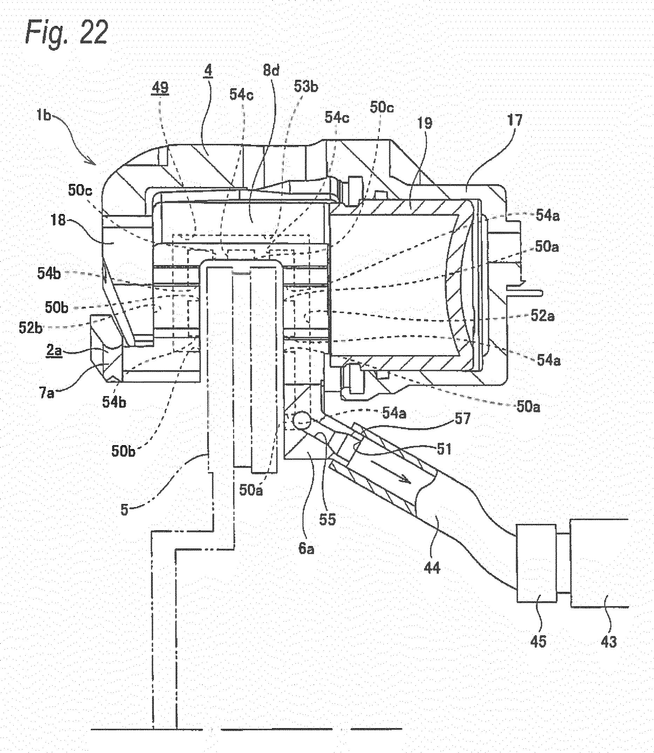

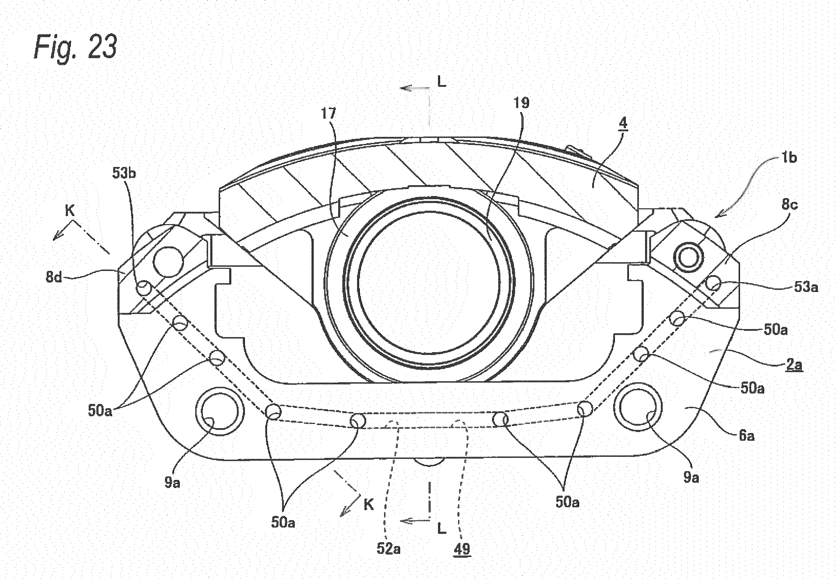

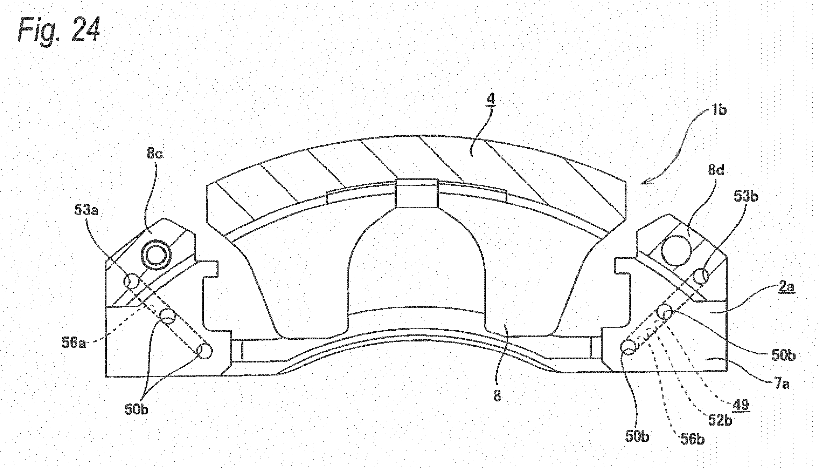

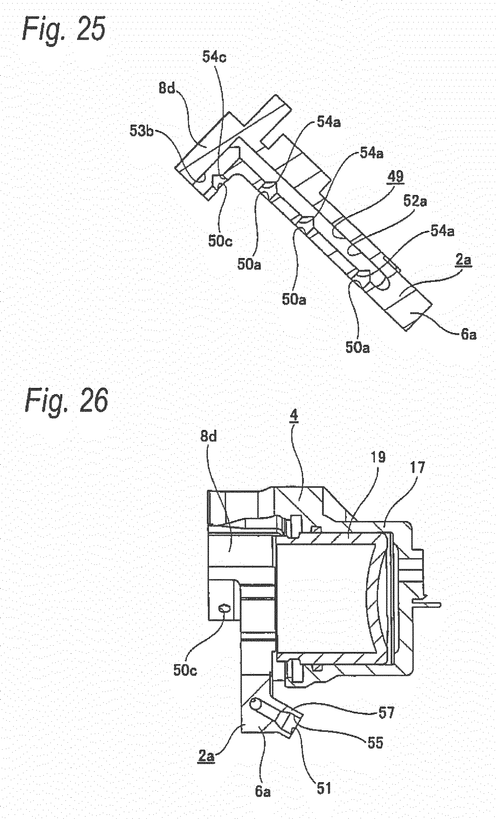

Figs. 17 to 26 show a seventh embodiment of the present invention. In the seventh embodiment, as with a case of the conventional configuration described above, a case where the disc brake device of the present invention is applied to a floating type disc brake device 1b which is a type of disc brake device is described.

The disc brake device 1b of the seventh embodiment also includes a support 2a, a pair of inner pad 3a and outer pad 3b, and a caliper 4.

Among these, the support 2a is configured by connecting an inner side part 6a arranged on an inner side of the rotor 5 with an outer side part 7a arranged on an outer side of the rotor 5 by a pair of connecting arm portions (rotor path portion) 8c, 8d arranged to straddle the rotor 5 at both end portions in the circumferential direction. The support 2 having such a configuration is fixed to a suspension device such as a knuckle by inserting a bolt (not illustrated) into a mounting hole 9 formed in an inward part in the radial direction of the inner side part 6.

The inner pad 3a and the outer pad 3b are configured by linings 10a, 10b and pressure plates 11a, 11b respectively, and are supported so as to be displaced in the axial direction with respect to the support 2 in a state of facing two side surfaces of the rotor 5. For this reason, locking protruding parts 12a, 12a having a protruding shape formed at both end portions in the circumferential direction of the pressure plates 11a, 11b are engaged to recessed torque receiving portions 13a, 13a formed at both end portions in the circumferential direction of the support 2a respectively. Incidentally, although omitted in the drawings, it is also possible to adopt a configuration where a torque acting on a pair of pads is supported by using a pin supported and fixed on the support.

In addition, the caliper 4 is supported so as to be displaced in the axial direction with respect to the support 2a. For this reason, a pair of guide pins 14, 14 provided at both end portions in the circumferential direction of the caliper 4 is inserted slidably in the axial direction into a pair of guide holes 15a, 15a provided on the connecting arm portions 8c, 8d configuring the support 2a. In addition, dustproof boots 16, 16 are provided between outer circumferential surfaces of base end portions of the two guide pins 14, 14 and opening portions of the two guide holes 15a, 15a. In addition, in a state of straddling the inner pad 3a and the outer pad 3b, the caliper 4 has a cylinder portion 17 on the inner side and a claw portion 18 on the outer side, and a piston 19 for pressing the inner pad 3a against the inner side surface of the rotor 5 is fitted liquid-tightly in the cylinder portion 17.

In particular, in the case of the seventh embodiment, a communication passage 49 is formed in the support 2a. At the time of braking, the communication passage 49 passes abrasion powder generated with friction between the side surface of the rotor 5 and the linings 10a, 10b configuring the inner pad 3a and the outer pad 3b, and on an upstream side end thereof, a plurality of suction ports 50a, 50b, 50c opening on the surface of the support 2a are provided, and on a downstream side end thereof, one discharge port 51 opening on the surface of the support 2a is provided.

The communication passage 49 of the seventh embodiment includes a pair of main passages 52a, 52b, a pair of connecting passages 53a, 53b, a plurality (equal to the number of the suction ports 50a to 50c) of upstream end passages 54a, 54b, 54c, and one downstream end passage 55.

The main passage 52a of the two main passages 52a, 52b is formed inside the inner side part 6a and is formed in a substantially U shape along the shape of the inner side part 6a. In contrast, the main passage 52b is formed inside the outer side part 7a and is configured by a pair of linear portions 56a, 56b separated in the circumferential direction. The connecting passages 53a, 53b are formed in the axial direction inside the connecting arm portions 8c, 8d, and the two main passages 52a, 52b are continuous with each other. In addition, the upstream end passages 54a, 54b, 54c are provided in a state of being continuous with the suction ports 50a, 50b, 50c respectively. Among these, the upstream end passages 54a, 54b are continuous with the suction ports 50a, 50b and the main passages 52a, 52b respectively, and the upstream end passages 54c are continuous with the suction ports 50c, 50c and the connecting passages 53a, 53b respectively. The downstream end passage 55 is continuous with the main passage 52a and the discharge port 51 formed in the inner side part 6a. In this way, even in the case of this embodiment, passages 52a to 55 configuring the communication passage 49 are configured to merge (the number of passages decreases) as proceeding to the downstream (upstream end passages 54a, 54b, 54c → main passages 52a, 52b and connecting passages 53a, 53b → a downstream end passage 55) from the upstream.

In addition, even in the case of the seventh embodiment, each of the passages 52a to 55 configuring the communication passage 49 is circular in cross section and is formed directly in the support 2a. Specifically, the communication passage 49 is formed by drilling using a tool such as a drill. In addition, respective opening areas (cross-sectional areas) of upstream side half portions of the main passages 52a, 52b, the connecting passages 53a, 53b, the upstream end passages 54a, 54b, 54c, and the downstream end passage 55 are equal to each other and are about 1/4 of an opening area of a downstream side half portion of the downstream end passage 55.

The suction ports 50a, 50b, 50c are inlets for sucking abrasion powder generated with friction between the side surface of the rotor 5 and the two linings 10a, 10b into the support 2a (communication passage 49), and are provided in a part of the support 2a which is present near surroundings of the inner pad 3a and the outer pad 3b. Among the suction ports 50a, 50b, 50c, the suction ports 50a, 50a formed in the inner side part 6a open to the outer side surface of the inner side part 6a and face the inner side surface of the rotor 5. In the case of the seventh embodiment, the suction ports 50a, 50a are arranged at an inside in the radial direction than the inner pad 3a (four arranged), and are arranged at the rotation-in side and the rotation-out side of the inner pad 3a with respect to the circumferential direction respectively (two arranged on the rotation-in side and two arranged on the rotation-out side). In addition, the suction ports 50b, 50b formed in the outer side part 7a open to the inner side surface of the outer side part 7a and face the outer side surface of the rotor 5. In the case of the seventh embodiment, the suction ports 50b, 50b are arranged at the rotation-in side and the rotation-out side of the outer pad 3b with respect to the circumferential direction respectively (two arranged on the rotation-in side and two arranged on the rotation-out side). Further, the suction ports 50c, 50c formed on the connecting arm portions 8c, 8d straddling the rotor 5 in the axial direction open to the inner side surfaces in the radial direction of the connecting arm portions 8c, 8d, and face the outer circumferential surface of the rotor 5.

In addition, a cylindrical connecting tube portion 57 is provided in a part of the inner side part 6a where the discharge port 51 is provided. The connecting tube portion 57 is a connecting portion used for connecting a suction device 43 for causing air flow from the upstream side to the downstream side in the communication passage 49. In the case of the seventh embodiment, the other end portion of a duct 44, one end of which is connected to the suction device 43, is connected to the connecting tube portion 57. The suction device 43 same as the case of the first embodiment can be used.

In addition, an exchangeable filter 45 is provided at a middle portion of the duct 44, and air discharged from the discharge port 51 is passed through the filter 45 to recover (capture) the abrasion powder. In addition, even in the case of the seventh embodiment, air in which the abrasion powder discharged from the suction device 43 has been recovered is fed in from, for example, the lower side of the disc brake device 1b, and the abrasion powder is fed into the suction ports 50a, 50, and 50c effectively.

Even in the case of the disc brake device 1b of the seventh embodiment having a configuration as the above, as with the case of the first embodiment, the abrasion powder generated at the time of braking can be restrained from scattering to the surroundings. That is, even in the case of the seventh embodiment, the air flow from the upstream side to the downstream side in the communication passage 49 can be caused by driving the suction device 43 at the time of braking of the disc brake device 1b or during traveling of a vehicle. Therefore, air is sucked in from the suction ports 50a, 50b, 50c separately, and the sucked air is passed through the communication passage 49 and discharges from the discharge port 51. More specifically, air sucked in from the suction port 50a passes through the upstream end passage 54a and the main passage 52a in this order, and then is discharged from the discharge port 51. In addition, the air sucked in from the suction port 50b passes through the upstream end passage 54b, the main passage 52b, the connecting passages 53a, 53b, and the main passage 52a, and then is discharged from the discharge port 51. In addition, the air sucked in from the suction port 50c passes through the upstream end passages 54c, the connecting passages 53a, 53b, and the main passage 52a in this order, and then is discharged from the discharge port 51. Therefore, in the case of the seventh embodiment, together with air having flow as described above, abrasion powder can be sucked in from the suction ports 50a, 50b, 50c separately, passed through the communication passage 49, and discharged from the discharge port 51. Further, the abrasion powder discharged from the discharge port 51 can be collected by the filter 45 provided in the midway of the duct 44.

In addition, even in the case of the seventh embodiment, the suction ports 50a, 50b, 50c are provided in a state of opening on the surface of the support 2a, and since the suction ports 50a, 50b, 50c are located near the side surface of the rotor 5 and the linings 10a, 10b, which is a position where the abrasion powder is generated, it is possible to efficiently suck the abrasion powder in even without using a suction device having a large suction amount. In addition, in the case of the seventh embodiment, abrasion powder blown away to the outside in the radial direction with rotation of the rotor 5, can be sucked in by the suction ports 50c, 50c provided at an outside in the radial direction of the inner pad 3a and the outer pad 3b, and the abrasion powder blown away to the rotation-out side can be sucked in by the suction ports 50a, 50b, 50c provided at the rotation-out side of the inner pad 3a and the outer pad 3b. In addition, among the generated abrasion powder, abrasion powder falling downward by the action of gravity can be sucked in efficiently by the suction ports 50a, 50b arranged in parts located below the inner pad 3a and the outer pad 3b when established to the knuckle.

Other configurations and action effects are the same as those in the first embodiment.

### [Eighth Embodiment]

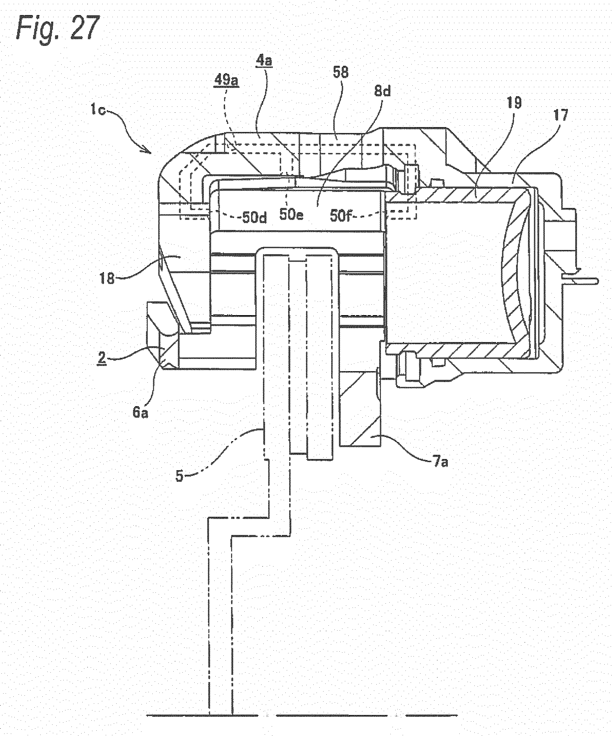

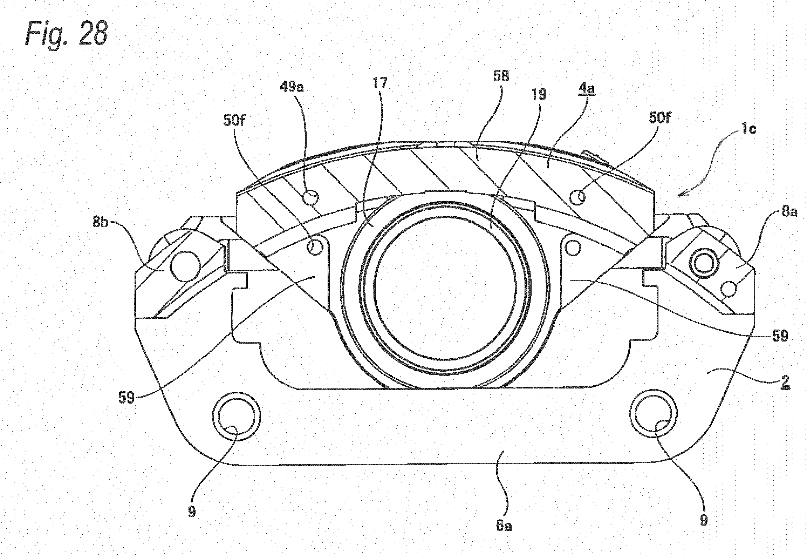

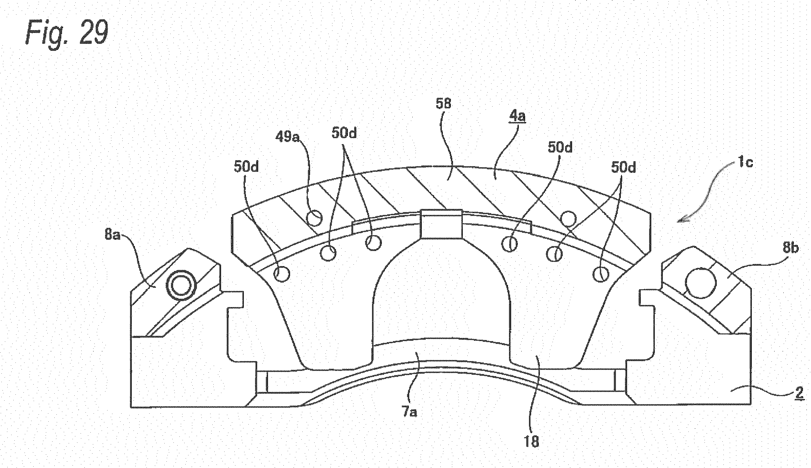

Figs. 27 to 29 show an eighth embodiment of the present invention. Even in a case of the eighth embodiment, as with the case of the seventh embodiment described above, a case where the present invention is applied to a floating type disc brake device 1c is shown.

Particularly in the case of the eighth embodiment, a communication passage 49a for passing abrasion powder is formed in the caliper 4a which is supported so as to be displaced in the axial direction with respect to the support 2 and displaces in the axial direction with extrusion of the piston 19. Further, suction ports 50d, 50e, 50f provided at the upstream side end of the communication passage 49a are opened on the surface of the caliper 4a. Among these, the suction port 50d opens on an outer end side part in the radial direction of an inner side surface of the claw portion 18 configuring the caliper 4a. In addition, as straddling the rotor 5, the suction port 50e opens on an inner side surface in the radial direction of the bridge portion 58 formed on a part between the claw portion 18 configuring the caliper 4a and the cylinder portion 17. In addition, the suction port 50f opens on the outer side surface of flange portions 59, 59 where two sides of the caliper 4a in the circumferential direction of the cylinder portion 17 are provided.

In addition, a discharge port (not illustrated) is provided at a downstream side end portion of the communication passage 49a, and a duct (not illustrated) is connected to a connecting tube portion formed surrounding the discharge port. In addition, even in the case of the eighth embodiment, a suction device is connected to an end portion on an opposed side of the end portion connected to the connecting tube portion of both end portions of the duct, and a filter is provided at the middle portion of the duct.

Even in the case of the eighth embodiment having a configuration as the above, as with the case of the first embodiment and seventh embodiment described above, it is possible to restrain abrasion powder generated at the time of braking scattering to the surroundings without increasing the size of the device or deteriorating the brake performance.

In addition, each of the configuration of the eighth embodiment and the configuration of the seventh embodiment can be implemented independently, and can be implemented in combination at the same time. In the case of implementation at the same time in this way, two ducts are connected to one suction device, and these ducts can be connected to the connecting tube portions provided on the caliper and the support respectively.

Other configurations and action effects are the same as those in the seventh embodiment.

Here, characteristics of embodiments of the disc brake device according to the present invention described above are briefly summarized and listed below, respectively.
[1] A disc brake device (1a, 1b, 1c) including:
   a pad support member (support 2a, caliper 20) fixed to a vehicle body in a state of being adjacent to a rotor (5) rotating together with vehicle wheels,
   a pad (inner pad 3a and outer pad 3b) guided movably in an axial direction by the pad support members, and
   a piston (19, inner pistons 27a, 27b and outer pistons 28a, 28b) for pressing the pads toward a side surface of the rotor, wherein
   at least one suction port (36a to 36c, 50a to 50f) for sucking in abrasion powder generated based on friction between a side surface of the rotor (5) and the pad (inner pad 3a and outer pad 3b) opens, on a surface of the pad support member (support 2a, caliper 20), or on a surface of at least any one member of a displacement member (calipers 4, 4a) and the pad support member (support 2a, caliper 20) when the displacement member (caliper 4, 4a) configured to be displaced in an axial direction with extrusion of the piston (19) and supported to the pad support member (support 2a, caliper 20) so as to be displaced in the axial direction is provided.
[2] The disc brake device (1a, 1b, 1c) according to the above [1], wherein, in member provided with the suction port, the suction port (36a to 36c, 50a to 50f) is provided on a part (caliper 20, support 2a, caliper 4a) of the member present near surroundings of the pad (inner pad 3a and outer pad 3b).
[3] The disc brake device (1a, 1b, 1c) according to any one of the above [1] to [2], wherein, in the member (caliper 4a and 20, support 2a) provided with the suction port, the suction port (36a to 36c, 50a to 50f) is provided on a surface facing the side surface or an outer circumferential surface of the rotor (5).
[4] The disc brake device (1a, 1b) according to any one of the above [1] to [3], wherein, in the member (caliper 20, support 2a) provided with the suction port, the suction port (36a, 36b, 50a, 50b) are provided on a part of the member present at an outside or an inside of the pad (inner pad 3a and outer pad 3b) in a radial direction.
[5] The disc brake device (1a, 1b) according to any one of the above [1] to [3], wherein, in the member (caliper 20, support 2a) provided with the suction port, the suction port (36a, 36b, 50a, 50b) is provided on a part of the member present at rotation-out sides of the pad (inner pad 3a and outer pad 3b) with respect to a circumferential direction.
[6] The disc brake device (1a) according to the above [5], wherein, a number of the suction port (36a, 36b) provided on the part present at the rotation-out side of the pad (inner pad 3a and outer pad 3b) with respect to the circumferential direction is more than a number of the suction port (36a, 36b) provided on a part of the member present at a rotation-in side of the pad.
[7] The disc brake device (1a, 1b, 1c) according to any one of the above [1] to [6], wherein, in the member (caliper 20, support 2a) provided with the suction port, the suction port (36c, 50c, 50e) is provided on a part of the member straddling the rotor (5) in the axial direction.
[8] The disc brake device (1a) according to any one of the above [1] to [7], wherein, the suction port (36a to 36c) is provided in a state of protruding to a direction approaching to the rotor (5) from a part deviated from a part (caliper 20) provided with the suction port.
[9] The disc brake device (1a, 1b, 1c) according to any one of the above [1] to [8], wherein a communication passage (35, 35a, 35b, 49, 49a) for passing abrasion powder sucked in from the suction port is provided in the member (caliper 20, 4a, support 2a) provided with the suction port (36a to 36c, 50a to 50f), and the suction port is provided on an upstream side end of the communication passage.
[10] The disc brake device (1a, 1b, 1c) according to the above [9], wherein, a part or whole of the communication passage (35, 35a, 35b, 49, 49a) is provided inside the member (caliper 20, 4a, support 2a) provided with the suction port (35, 35a, 35b, 49, 49a).
[11] The disc brake device (1a) according to the above [9], wherein, a part of the communication passage (upstream end passages 40a, 40b, 40c) is provided outside the member (caliper 20) provided with the suction port (36a to 36c).
[12] The disc brake device (1a) according to any one of the above [9] to [11], wherein, a part or whole of the communication passage (35a) is configured by a member (pipe 46) in addition to the member (caliper 20) provided with the suction port (36a to 36c).
[13] The disc brake device (1a) according to any one of the above [9] to [12], wherein, the communication passage (35, 49) merges as proceeding to a downstream side.
[14] The disc brake device (1a, 1b) according to any one of the above [9] to [13], wherein a discharge port (37, 51) for discharging the abrasion powder sucked from the suction port into the communication passage from the communication passage is provided in the member (caliper 20, support 2a) provided with the suction port (36a to 36c, 50a to 50c) on a downstream side end of the communication passage (35, 49).
[15] The disc brake device (1a, 1b) according to the above [14], wherein a connecting portion (connecting tube portions 42, 57) for connecting a device (suction device 43) for inducing air flow from the upstream side to the downstream side in the communication passage (35, 49) is provided in the member (caliper 20, support 2a) provided with the suction port (36a to 36c, 50a to 50c) on a part where the discharge port (37, 51) is provided.
[16] The disc brake device (1a, 1b) according to the above (15), wherein air discharged from the discharge port (37, 51) is passed through a filter (45), and the abrasion powder is collected.
[17] The disc brake device (1a) according to the above [16], wherein air in which the abrasion powder is collected through the filter (45) is fed into the suction port (36a to 36c).
[18] The disc brake device (1a) according to any one of the above [1] to [17], wherein the member provided with the suction port (36a to 36c) is a caliper (20) configuring an opposed piston type disc brake device.
[19] The disc brake device (1b, 1c) according to any one of the above [1] to [17], wherein the member provided with the suction port (50a to 50f) is a support (2a) or a caliper (4a) supported so as to be displaced in the axial direction with respect to the support which configure a floating type disc brake device.

Incidentally, the present invention is not limited to the above-described embodiments, and can be appropriately modified, improved, or the like. In addition, configuration elements such as materials, shapes, dimensions, numbers, and arrangement places in the above-described embodiments are arbitrary and not limited as long as the present invention can be achieved.

In addition, this application is based on Japanese Patent Application (Patent Application No. 2015-213606) filed on October 30, 2015, contents of which are incorporated herein by reference.

### Industrial Applicability

The present invention is not limited to configurations of embodiments as described above, and can appropriately change and implement not only the formation positions and formation number of the suction ports, but also configurations of the communication passages and the like according to the mounting position, type, application, size, and the like of the disc brake device. In addition, it is also possible to appropriately combine and implement configurations of the second to sixth embodiments described above and configurations of the seventh embodiment and the eighth embodiment.

### Description of Reference Numerals

- 1, 1a, 1b: disc brake device
- 2: support
- 2a: support (pad support member)
- 3a: inner pad (pad)
- 3b: outer pad (pad)
- 4: caliper
- 4a: caliper (displacement member)
- 5: rotor
- 6, 6a: inner side part
- 7, 7a: outer side part
- 8a, 8b, 8c, 8d: connecting arm portion
- 9, 9a: mounting hole
- 10a, 10b: lining
- 11a, 11b: pressure plate
- 12: locking protruding part
- 13, 13a: torque receiving portion
- 14 g: uide pin
- 15, 15a: guide hole
- 16: boots
- 17: cylinder portion
- 18: claw portion
- 19: piston
- 20: caliper (pad support member)
- 21: inner body part
- 22: outer body part
- 23a, 23b: connecting portion
- 24: window portion
- 25: inner cylinder
- 26: outer cylinder
- 27a, 27b: inner piston (piston)
- 28a, 28b: outer piston (piston)
- 29: mounting seat
- 30: pad pin
- 31: guide hole
- 32: pad spring
- 33: elastic arm portion
- 34: bleeder screw
- 35, 35a, 35b: communication passage
- 36a to 36c: suction port
- 37: discharge port
- 38a, 38b: main passage
- 39a, 39b: connecting passage
- 40a, 40b, 40c: upstream end passage
- 41: downstream end passage
- 42: connecting tube portion (connecting portion)
- 43: suction device (device for inducing air flow)
- 44: duct
- 45: filter
- 46, 46a: pipe
- 47: groove
- 48: cover
- 49, 49a: communication passage
- 50a to 50f: suction port
- 51: discharge port
- 52a, 52b: main passage
- 53a, 53b: connecting passage
- 54a, 54b, 54c: upstream end passage
- 55: downstream end passage
- 56a, 56b: linear portion
- 57: connecting tube portion (connecting portion)
- 58: bridge portion
- 59: flange portion

## Claims

1. A disc brake device comprising:
a pad support member fixed to a vehicle body in a state of being adjacent to a rotor rotating with vehicle wheels;
a pad guided movably in an axial direction by the pad support member; and
a piston for pressing the pad toward a side surface of the rotor, wherein
at least one suction port for sucking in abrasion powder generated based on friction between the side surface of the rotor and the pad opens, on a surface of the pad support member, or on a surface of at least any one of a displacement member and the pad support member when the displacement member configured to be displaced in the axial direction with extrusion of the piston and supported to the pad support member so as to be displaced in the axial direction is provided.

2. The disc brake device according to claim 1, wherein, in a member provided with the suction port, the suction port is provided on a part of the member present near surroundings of the pad.

3. The disc brake device according to any one of claims 1 to 2, wherein, in the member provided with the suction port, the suction port is provided on a surface facing the side surface or an outer circumferential surface of the rotor.

4. The disc brake device according to any one of claims 1 to 3, wherein, in the member provided with the suction port, the suction port is provided on a part of the member present at an outside or an inside of the pad in a radial direction.

5. The disc brake device according to any one of claims 1 to 4, wherein, in the member provided with the suction port, the suction port is provided on a part of the member present at a rotation-out side of the pad with respect to a circumferential direction.

6. The disc brake device according to claim 5, wherein, a number of the suction port provided on the part present at the rotation-out side of the pad with respect to the circumferential direction is more than a number of the suction port provided on a part of the member present at a rotation-in side of the pad.

7. The disc brake device according to any one of claims 1 to 6, wherein, in a member provided with the suction port, the suction port is provided on a part of the member straddling the rotor in the axial direction.

8. The disc brake device according to any one of claims 1 to 7, wherein, the suction port is provided in a state of protruding to a direction approaching to the rotor from a part deviated from a part provided with the suction port.

9. The disc brake device according to any one of claims 1 to 8, wherein a communication passage for passing abrasion powder sucked in from the suction port is provided in the member provided with the suction port, and the suction port is provided on an upstream side end of the communication passage.

10. The disc brake device according to claim 9, wherein, a part or whole of the communication passage is provided inside the member provided with the suction port.

11. The disc brake device according to claim 9, wherein, a part of the communication passage is provided outside the member provided with the suction port.

12. The disc brake device according to any one of claims 9 to 11, wherein, a part or whole of the communication passage is configured by a member in addition to the member provided with the suction port.

13. The disc brake device according to any one of claims 9 to 12, wherein, the communication passage merges as proceeding to a downstream side.

14. The disc brake device according to any one of claims 9 to 13, wherein a discharge port for discharging the abrasion powder sucked from the suction port into the communication passage from the communication passage is provided in the member provided with the suction port on a downstream side end of the communication passage.

15. The disc brake device according to claim 14, wherein a connecting portion for connecting a device for inducing air flow from the upstream side to the downstream side in the communication passage is provided in the member provided with the suction port on a part where the discharge port is provided.

16. The disc brake device according to claim 15, wherein air discharged from the discharge port is passed through a filter, and the abrasion powder is collected.

17. The disc brake device according to claim 16, wherein air in which the abrasion powder is collected through the filter is fed into the suction port.

18. The disc brake device according to any one of claims 1 to 17, wherein the member provided with the suction port is a caliper configuring an opposed piston type disc brake device.

19. The disc brake device according to any one of claims 1 to 17, wherein the member provided with the suction port is a support or a caliper supported so as to be displaced in the axial direction with respect to the support which configure a floating type disc brake device.
